# EUROPEAN PATENT APPLICATION

(11) **EP 3 424 996 A1**
(43) Date of publication of application: **09.01.2019**
(21) Application number: 17759445.4
(22) Date of filing: 18.01.2017
(51) Int. Cl.: C08L 9/00, B32B 25/16, B32B 27/00, B65G 15/34, C08K 3/04, C08K 3/26, C08K 3/36

(54) **RUBBER COMPOSITION, LAMINATE, AND CONVEYOR BELT**

(30) Priority: 04.03.2016 JP 2016041866
(71) Applicant: Bridgestone Corporation, Chuo-Ku Tokyo 104-8340 (JP)
(72) Inventor: TAKANO Genho, Tokyo 104-8340 (JP); AKAMA Shuyo, Tokyo 104-8340 (JP); TSUNENISHI Youhei, Tokyo 104-8340 (JP)
(74) Representative: Lang, Johannes
(86) International application number: PCT/JP2017/001587
(87) International publication number: WO 2017/149973

(57) **Abstract**

Provided is a rubber composition capable of exhibiting high adhesiveness to a reinforcing member when vulcanized, without depending on the vulcanization temperature. The rubber composition comprises: 100 parts by mass of (A) a diene based rubber; 25 parts by mass or more and 55 parts by mass or less of (B) carbon black including a carbon black (b-1) having a nitrogen adsorption BET specific surface area of 50 m²/g or more and a DBP oil absorption of 80 mL/100g or more and 130 mL/100g or less, and a carbon black (b-2) having a nitrogen adsorption BET specific surface area of less than 50 m²/g and a DBP oil absorption of 60 mL/100g or more and less than 110 mL/100g; and 3 parts by mass or more of (C) wet silica.

## Description

### TECHNICAL FIELD

This disclosure relates to a rubber composition, a laminated body, and a conveyor belt.

### BACKGROUND

For the purpose of reinforcing a rubber member to improve strength thereof, reinforcing members, including an organic fiber such as polyethylene terephthalate and nylon, which is untreated or dipped with an adhesive component such as resorcin-formaldehyde-latex (RFL), etc. on its surface, and/or an inorganic fiber such as steel cord, and the like, are used for rubber products required to have strength, such as tires for automobiles, conveyor belts, and hoses.

In manufacture of such rubber product, such reinforcing member and rubber member and/or such reinforcing members themselves are occasionally adhered to one another through an adhesive containing a rubber composition. For example, conveyor belts are frequently used as item transportation means in various industrial fields, and thus are required to have high durability capable of withstanding friction and impact from transported items. Therefore, they are ordinarily manufactured by: preparing one or more layers of reinforcing member, and cover rubbers as rubber members; laminating them via an adhesive containing a rubber composition such that the cover rubbers become the upper and lower outermost layers; and then performing vulcanization adhesion. In such situation, in order to obtain high reinforcing effect, desired is a rubber composition capable of exhibiting high adhesiveness between reinforcing members and high adhesiveness between a rubber member and a reinforcing member.

For example, in use of a conveyor belt, there are cases that after manufacture of one layered belt including a layer containing a rubber composition and a reinforcing member layer, a processing (so-called endless processing) is performed to peel off a part of the layers at both ends thereof, and to adhere the ends to each other with an endless adhesive and/or an endless adhesive rubber, etc. The adhered both ends (endless portion) are required to have high durability in actual use, and it is particularly important that the members in the endless portion, particularly the reinforcing members, are firmly adhered.

Here, from a viewpoint of adhesiveness between a rubber member using a rubber composition and a reinforcing member, for example, JPH06-306211A (PTL1) discloses that a rubber manufacturable from a rubber composition containing 0.5 parts to 10 parts by mass of N,N'-m-phenylene bismaleimide, 0.3 parts to 3 parts by mass of a carboxylic acid which is divalent or more or an anhydride thereof, and 0.3 to 10 parts by mass of a compound that generates formaldehyde when heated, per 100 parts by mass of a rubber such as natural rubber and styrene butadiene rubber, has excellent vulcanization adhesion performance to a reinforcing member.

### CITATION LIST

### Patent Literature

PTL1: JPH06-306211A

### SUMMARY

### (Technical Problem)

In the case of using a rubber composition to adhere a rubber member to a reinforcing member, etc., the rubber composition is generally vulcanized so as to exhibit high adhesiveness. For example, in manufacture of a conveyor belt, when providing the rubber composition with high adhesiveness to a reinforcing member, etc., the vulcanization of the rubber composition may inevitably be performed at low temperature for a long time rather than at high temperature for a short time, so as to balance out the cycle time with other processes.

Here, our study has discovered that the aforementioned conventional rubber compositions are incapable of obtaining sufficient adhesiveness in the case of being vulcanized under a condition of a low temperature and a long time as compared with the case of being vulcanized under a condition of a high temperature and a short time. Therefore, the aforementioned conventional rubber compositions may be incapable of enduing high durability to a rubber product such as conveyor belt and the like depending on the conditions of vulcanization, and in order to priorly maintain durability of the rubber product such as conveyor belt and the like, there is a problem that conditions of vulcanization such as temperature, time and the like cannot be changed depending on the situation, i.e., optimization of production conditions of the rubber product is difficult.

It would thus be helpful to provide a rubber composition capable of exhibiting high adhesiveness to a reinforcing member when vulcanized, without depending on the vulcanization temperature. It would also be helpful to provide a high-durability laminated body using the aforementioned rubber composition and a high-durability conveyor belt using the aforementioned laminated body that can be manufactured under production conditions that can readily be optimized.

### (Solution to Problem)

As a result of intensive study, we discovered that a rubber composition obtained by compounding specific components at specific amounts to a diene based rubber exhibits high adhesiveness to a reinforcing member when vulcanized, without depending on the vulcanization temperature.

The disclosed rubber composition comprises:
100 parts by mass of (A) a diene based rubber;
25 parts by mass or more and 55 parts by mass or less of (B) carbon black including a carbon black (b-1) having a nitrogen adsorption BET specific surface area of 50 m²/g or more and a DBP oil absorption of 80 mL/100g or more and 130 mL/100g or less, and a carbon black (b-2) having a nitrogen adsorption BET specific surface area of less than 50 m²/g and a DBP oil absorption of 60 mL/100g or more and less than 110 mL/100g; and
3 parts by mass or more of (C) wet silica.

The disclosed laminated body is obtainable by laminating and adhering a layer comprising the disclosed rubber composition and a reinforcing member layer.

The disclosed conveyor belt comprises the disclosed laminated body.

### (Advantageous Effect)

According to this disclosure, it is possible to provide a rubber composition capable of exhibiting high adhesiveness to a reinforcing member when vulcanized, without depending on the vulcanization temperature. Moreover, according to this disclosure, it is possible to provide a high-durability laminated body using the aforementioned rubber composition and a high-durability conveyor belt using the aforementioned laminated body that can be manufactured under production conditions that can readily be optimized.

### BRIEF DESCRIPTION OF THE DRAWINGS

In the accompanying drawings:
FIGS. 1A and 1B schematically illustrate a peeled surface in a peel test on a layer containing the disclosed rubber composition and a reinforcing member layer;
FIGS. 2A and 2B schematically illustrate a peeled surface in a peel test on a layer containing a rubber composition of a comparative example and a reinforcing member layer; and
FIGS. 3A and 3B schematically illustrate a peeled surface in a peel test on a layer containing a rubber composition of another comparative example and a reinforcing member layer.

### DETAILED DESCRIPTION

### <Rubber composition>

The following describes one of the disclosed embodiments in detail.

The disclosed rubber composition is obtainable by compounding at least a diene based rubber, carbon black, wet silica, optionally calcium carbonate, and further compounding other components as necessary.

### ((A) Diene based rubber)

The disclosed rubber composition needs to contain a diene based rubber as a component (A). The diene based rubber is capable of exhibiting performances such as high elasticity and high heat resistance via vulcanization. The diene based rubber is not specifically limited and may be appropriately selected depending on the purpose. Examples include natural rubber (NR); and diene based synthetic rubbers such as butadiene rubber (BR), styrene-butadiene rubber (SBR), isoprene rubber (IR), chloroprene rubber (CR), ethylene-propylene-diene rubber (EPDM), acrylonitrile-butadiene rubber (NBR) and butyl rubber (IIR). These may be used alone or in a combination of two or more.

In particular, from a viewpoint of improving adhesiveness to a reinforcing member, the disclosed rubber composition preferably contains a natural rubber and a styrene-butadiene rubber as the diene based rubber.

The ratio of the diene based rubber in the rubber component of the disclosed rubber composition is not specifically limited and may be appropriately selected depending on the purpose, but is preferably 80 mass% or more, more preferably 90 mass% or more, and particularly preferably 100 mass%. A ratio of the diene based rubber in the rubber component of 80 mass% or more improves adhesiveness of the obtained rubber composition and a reinforcing member, and improves durability of a rubber product using a laminated body of a layer containing the rubber composition and a reinforcing member layer.

Note that in the case of using both a natural rubber and a styrene-butadiene rubber as the diene based rubber, the ratio of the content of the natural rubber to the total content of the natural rubber and the styrene-butadiene rubber is preferably 20 mass% or more, and preferably 60 mass% or less. A ratio of the content of the natural rubber of 20 mass% or more improves mechanical strength of a rubber member or rubber product using the obtained rubber composition, and on the other hand, a ratio of the content of the natural rubber of 60 mass% or less improves wear resistance and film thickness stability of a rubber member or rubber product using the obtained rubber composition. From the same viewpoint, the ratio of the content of the natural rubber to the total content of the natural rubber and the styrene-butadiene rubber is more preferably 30 mass% or more, and more preferably 50 mass% or less.

Moreover, in the case of using both a natural rubber and a styrene-butadiene rubber as the diene based rubber, the ratio of the content of the styrene-butadiene rubber to the total content of the natural rubber and the styrene-butadiene rubber is preferably 40 mass% or more, and preferably 80 mass% or less. A ratio of the content of the styrene-butadiene rubber of 40 mass% or more improves aging resistance of a rubber member or rubber product using the obtained rubber composition, and on the other hand, the ratio of the content of the styrene-butadiene rubber of 80 mass% or less improves flex cracking resistance of a rubber member or rubber product using the obtained rubber composition. From the same viewpoint, the ratio of the content of the styrene-butadiene rubber to the total content of the natural rubber and the styrene-butadiene rubber is more preferably 50 mass% or more, and more preferably 70 mass% or less.

The "rubber member" herein refers to any member that contains at least a rubber component and is used in manufacture of a rubber product.

Note that other than the diene based rubber, the disclosed rubber composition may also contain a non-diene based rubber (a rubber component other than diene based rubber) as the rubber component, and may use a non-diene based rubber ordinarily used in rubber products without being specifically limited.

Moreover, in the disclosed rubber composition, a reclaimed rubber containing a diene based rubber and optionally a non-diene based rubber may be used. In the case of using a reclaimed rubber in the disclosed rubber composition, regarding its compounding amount, from a viewpoint of sufficiently ensuring quality of a rubber product using the obtained rubber composition, it is preferable that a polymer component in the reclaimed rubber is 20 mass% or less with respect to a total amount of compounded polymers.

### ((B) Carbon black)

The disclosed rubber composition needs to contain carbon black as a component (B). The carbon black, as a reinforcing filler, has a function of improving modulus and wear resistance of the rubber composition, and appropriately improving adhesiveness of this rubber composition and a reinforcing member. The carbon black may be used alone or in a combination of two or more.

The carbon black used in the disclosed rubber composition contains at least two types of carbon black (the carbon black (b-1) and the carbon black (b-2)) distinguished from each other in the aspects of the specific surface area and the structure. These carbon blacks are described in the following.

### -Carbon black (b-1)-

First explained is the carbon black (b-1), which has a nitrogen adsorption BET specific surface area of 50 m²/g or more. The carbon black (b-1) mainly serves improve flex fatigue resistance and ensuring sufficient reinforcement performance when used together with the carbon black (b-2) described below. Further, the carbon black (b-1) has a nitrogen adsorption BET specific surface area of preferably more than 100 m²/g, more preferably 105m²/g or more, from a viewpoint of further ensuring sufficient reinforcement performance and further improving flex fatigue resistance. Moreover, the carbon black (b-1) preferably has a nitrogen adsorption BET specific surface area of 130 m²/g or less.

The nitrogen adsorption BET specific surface area of the carbon black may be measured with, for example, a conventionally publicly-known method.

The carbon black (b-1) has a DBP oil absorption of 80 mL/100g or more and 130 mL/100g or less. A DBP oil absorption of the carbon black (b-1) of less than 80 mL/100g may cause low exhibited adhesiveness to a reinforcing member when vulcanizing the rubber composition under a condition of a comparatively low vulcanization temperature, while on the other hand, a DBP oil absorption of more than 130 mL/100g may cause an excessively high reinforcing effect, which reduces the amount of the rubber composition remaining on a reinforcing member (rubber attachment amount) when adhering and then peeling the rubber composition off from the reinforcing member. Moreover, in the carbon black (b-1), the DBP oil absorption is preferably 90 mL/100g or more, and the DBP oil absorption is preferably 120 mL/100g or less. The DBP oil absorption of the carbon black (b-1) of 90 mL/100g or more further improves exhibited adhesiveness to a reinforcing member when vulcanizing the rubber composition under a condition of a comparatively low vulcanization temperature, and the DBP oil absorption of 120 mL/100g or less increases the rubber attachment amount.

The carbon black (b-1) may be used alone or in a combination of two or more.

The DBP oil absorption of the carbon black may be measured according to, e.g., ISO 6894.

### -Carbon black (b-2)-

Next explained is the carbon black (b-2), which has a nitrogen adsorption BET specific surface area of less than 50 m²/g. The carbon black(b-2) mainly serves to maintain productivity such as scattering resistance, reliability and the like during manufacture, and ensuring high dispersibility in the rubber composition during kneading when used together with the aforementioned carbon black (b-1). The carbon black (b-2) preferably has a nitrogen adsorption BET specific surface area of 45 m²/g or less, more preferably 40 m²/g or less from a viewpoint of further ensuring productivity and/or dispersibility. The carbon black (b-2) preferably has a nitrogen adsorption BET specific surface area of 20 m²/g or more.

The carbon black (b-2) has a DBP oil absorption of 60 mL/100g or more and 110 mL/100g or less. The DBP oil absorption of the carbon black (b-2) of less than 60 mL/100g may be incapable of sufficiently improving dispersity of the carbon black (b-1), while on the other hand, the DBP oil absorption of 110 mL/100g or more may be incapable of sufficiently ensuring dispersity in the rubber of the carbon black (b-2) itself. Moreover, in the carbon black (b-2), the DBP oil absorption is preferably 70 mL/100g or more, and the DBP oil absorption is preferably 100 mL/100g or less. The DBP oil absorption of the carbon black (b-2) of 70 mL/100g or more further improves dispersity of the carbon black (b-1), and the DBP oil absorption of 100 mL/100g or less further improves dispersity in the rubber of the carbon black (b-2) itself.

The carbon black (b-2) may be used alone or in a combination of two or more.

The content of carbon black in the disclosed rubber composition needs to be 25 parts by mass or more and 55 parts by mass or less per 100 parts by mass of the diene based rubber. The content of carbon black in the rubber composition of less than 25 parts by mass per 100 parts by mass of the diene based rubber deteriorates peel strength between the rubber composition and a reinforcing member. Moreover, the content of carbon black in the rubber composition of more than 55 parts by mass per 100 parts by mass of the diene based rubber deteriorates operability when peeling a layer containing the rubber composition off from a reinforcing member layer, e.g., during endless processing of a conveyor belt. Further, the content of carbon black in the rubber composition is more preferably 30 parts by mass or more per 100 parts by mass of the diene based rubber from a viewpoint of improving peel strength between the rubber composition and a reinforcing member, and is more preferably 50 parts by mass or less per 100 parts by mass of the diene based rubber from a viewpoint of suitably maintaining operability when peeling a layer containing the rubber composition off from a reinforcing member layer, e.g. during endless processing of a conveyor belt.

The ratio of the carbon black (b-1) to the total of the carbon black (b-1) and the carbon black (b-2) is not specifically limited and may be appropriately selected depending on the purpose, but is preferably 10 mass% or more, and preferably 50 mass% or less. This allows for sufficiently maintaining dispersity of the carbon black (b-1) and the carbon black (b-2), and simultaneously sufficiently maintaining dispersity of wet silica and optionally contained calcium carbonate. This also allows for further lowering vulcanization temperature dependence of adhesiveness of the rubber composition, and readily optimizing conditions for manufacturing a laminated body of a layer containing the rubber composition and a reinforcing member layer, or a rubber product such as conveyor belt and the like including the laminated body.

### ((C) Wet silica)

The disclosed rubber component needs to contain a wet silica as a component (C). The wet silica may be obtained by, for example, using sodium silicate as a raw material, neutralizing its water solution to precipitate silica, filtering, and drying. The wet silica is classified into precipitated silica and gel process silica, both of which may be used. By using the wet silica in the rubber composition, it is possible to improve adhesiveness of such rubber composition and a reinforcing member such as an organic fiber. The reason thereof has not been clarified, but it can be considered that the high polarity unique to wet silica contributes to improvement of adhesiveness. The wet silica may be used alone or in a combination of two or more.

The nitrogen adsorption BET specific surface area (N₂SA) of the wet silica used in the disclosed rubber composition is not specifically limited and may be appropriately selected depending on the purpose, but is preferably 80 m²/g or more. A nitrogen adsorption BET specific surface area of the wet silica of 80 m²/g or more raises polarity of the rubber composition, further improves adhesiveness of the rubber composition and a reinforcing member, and inhibits deterioration of peel operability when peeling a layer containing this rubber composition off from a reinforcing member layer. From the same viewpoint, the nitrogen adsorption BET specific surface area of the wet silica is more preferably 120 m²/g or more, and even more preferably more than 200 m²/g. Moreover, the nitrogen adsorption BET specific surface area of the wet silica is preferably 300 m²/g or less, and more preferably 250 m²/g or less from a viewpoint of inhibiting deterioration of the rubber attachment amount when peeling a layer containing this rubber composition off from a reinforcing member layer.

Note that the nitrogen adsorption BET specific surface area of the wet silica may be measured according to ISO5794-1.

The content of wet silica in the disclosed rubber composition needs to be 3 parts by mass or more per 100 parts by mass of the diene based rubber. The content of wet silica in the rubber composition of less than 3 parts by mass per 100 parts by mass of the diene based rubber may cause insufficient improvement effect of adhesiveness to a reinforcing member obtained by compounding the wet silica, and may be incapable of readily optimizing conditions for manufacturing a laminated body of a layer containing the rubber composition and a reinforcing member layer, or a rubber product such as conveyor belt and the like including the laminated body, due to raised vulcanization temperature dependence of adhesiveness. Moreover, the content of wet silica in the disclosed rubber composition is preferably 4 parts by mass or more per 100 parts by mass of the diene based rubber. The content of wet silica in the rubber composition of 4 parts by mass or more per 100 parts by mass of the diene based rubber sufficiently improves adhesiveness to a reinforcing member, and improves flex fatigue resistance of a conveyor belt, etc. On the other hand, the content of wet silica in the disclosed rubber composition is preferably 25 parts by mass or less per 100 parts by mass of the diene based rubber. The compounding amount of wet silica in the rubber composition of 25 parts by mass or less per 100 parts by mass of the diene based rubber inhibits reduction of productivity of a rubber product using such rubber composition due to excessively long time required for vulcanization. The content of wet silica in the rubber composition is more preferably less than 10 parts by mass, even more preferably 9 parts by mass or less from the same viewpoint.

In the disclosed rubber composition, the total content of the aforementioned carbon black (component B) and wet silica (component C) is preferably 30 parts by mass or more, and preferably 80 parts by mass or less per 100 parts by mass of the diene based rubber. The total content of the carbon black and the wet silica of 30 parts by mass or more per 100 parts by mass of the diene based rubber is capable of obtaining a rubber composition having excellent peel strength from a reinforcing member and sufficiently high adhesiveness to the reinforcing member, further lowering vulcanization temperature dependence of adhesiveness of the rubber composition, and readily optimizing conditions for manufacturing a laminated body of a layer containing the rubber composition and a reinforcing member layer or a rubber product such as conveyor belt and the like including the laminated body. Moreover, the total content of the carbon black and the wet silica of 80 parts by mass or less per 100 parts by mass of the diene based rubber inhibits reduction of productivity of a rubber product using such rubber composition due to excessively long time required for vulcanization, inhibits deterioration of operability when peeling the rubber composition off from a reinforcing member layer, e.g., during endless processing of a conveyor belt, lowers vulcanization temperature dependence of adhesiveness of the rubber composition, and readily optimizes conditions for manufacturing a laminated body of a layer containing the rubber composition and a reinforcing member layer or a rubber product such as conveyor belt and the like including the laminated body. From the same viewpoint, the total content of the carbon black and the wet silica is more preferably 40 parts by mass or more, and more preferably 55 parts by mass or less per 100 parts by mass of the diene based rubber.

### ((D) Calcium carbonate)

The disclosed rubber composition preferably further contains calcium carbonate as a component (D). The calcium carbonate has a function of reducing breaking resistance of the rubber composition to thereby improve adhesiveness of the rubber composition to a reinforcing member such as an organic fiber, or to another rubber member, and has a function of improving peel operability of the rubber composition and the reinforcing member. The calcium carbonate may be used alone or in a combination of two or more.

The average primary particle size of the calcium carbonate that can be used in the disclosed rubber composition is not specifically limited and may be appropriately selected depending on the purpose, but is preferably 0.5 µm or more. The average primary particle size of the calcium carbonate of 0.5 µm or more sufficiently improves adhesiveness of the rubber composition and a reinforcing member.

Moreover, the average primary particle size of the calcium carbonate is more preferably 0.8 µm or more, and more preferably 13 µm or less. The average primary particle size of the calcium carbonate of 0.8 µm or more inhibits rise of viscosity of unvulcanized rubber composition, brings stable film thickness stability, inhibits reduction of productivity of a rubber product using such rubber composition due to excessively long time required for vulcanization, further lowers vulcanization temperature dependence of adhesiveness of the rubber composition, and readily optimizes conditions for manufacturing a laminated body of a layer containing the rubber composition and a reinforcing member layer or a rubber product such as conveyor belt and the like including the laminated body. Moreover, the average primary particle size of the calcium carbonate of 13 µm or less inhibits deterioration of modulus and tear strength of a vulcanized rubber composition, obtains stable reinforcing effect, further lowers vulcanization temperature dependence of adhesiveness of the rubber composition, and readily optimizes conditions for manufacturing a laminated body of a layer containing the rubber composition and a reinforcing member layer or a rubber product such as conveyor belt and the like including the laminated body. From the same viewpoint, the average primary particle size of the calcium carbonate is even more preferably 1.0 µm or more, further preferably 2.0 µm or more, and even more preferably 12.0 µm or less.

The average primary particle size of the calcium carbonate may be measured by, for example, observing with a scanning electron microscope.

Note that the calcium carbonate that can be used in the disclosed rubber composition aims to bring excellent dispersity in the rubber composition, and thus may be a calcium carbonate subjected to surface treatment by using an organic material as necessary.

The content of calcium carbonate in the disclosed rubber composition is preferably 10 parts by mass or more, and preferably 120 parts by mass or less per 100 parts by mass of the diene based rubber. The content of calcium carbonate in the rubber composition of 10 parts by mass or more per 100 parts by mass of the diene based rubber inhibits cost increase of the rubber composition, inhibits deterioration of operability due to close contact with a bumbary, a roll, etc., caused by excessively low viscosity of an unvulcanized rubber composition. In addition, the content of calcium carbonate in the rubber composition of 10 parts by mass or more per 100 parts by mass of the diene based rubber lowers vulcanization temperature dependence of adhesiveness of the rubber composition, and readily optimizes conditions for manufacturing a laminated body of a layer containing the rubber composition and a reinforcing member layer or a rubber product such as conveyor belt and the like including the laminated body. Moreover, the content of calcium carbonate in the rubber composition of 120 parts by mass or less per 100 parts by mass of the diene based rubber inhibits deterioration of peel strength between the rubber composition and a reinforcing member due to excessive decrease of a cohesion tearing force of the rubber composition, inhibits deterioration of productivity due to insufficient shearing heat caused by an unvulcanized rubber composition floating from a roll during rolling in which a roll is used, and sufficiently raises dispersity in the rubber composition during kneading using a Banbury mixer, a Brabender mixer, a kneader, etc. In addition, the content of calcium carbonate in the rubber composition of 120 parts by mass or less per 100 parts by mass of the diene based rubber lowers vulcanization temperature dependence of adhesiveness of the rubber composition, and readily optimizes conditions for manufacturing a laminated body of a layer containing the rubber composition and a reinforcing member layer or a rubber product such as conveyor belt and the like including the laminated body. From the same viewpoint, the content of calcium carbonate in the rubber composition is preferably 20 parts by mass or more.

### (Other components)

In the disclosed rubber composition, compounding ingredients ordinarily used in the rubber industry may be used appropriately depending on the purpose, in addition to the aforementioned diene based rubber, carbon black, wet silica, and optionally calcium carbonate. Examples of such compounding ingredients may include a vulcanizing agent such as sulfur, a vulcanization accelerator, a vulcanization accelerator aid such as zinc oxide, a softener, an age resistor, an antiscorching agent, a processing aid, a lubricant, a filler other than wet silica, carbon black and calcium carbonate, a filler modifier, a tackifier, a colorant, etc.

In the case of using sulfur as a vulcanizing agent in the disclosed rubber composition, its content is preferably 1.5 parts by mass or more and 3 parts by mass or less per 100 parts by mass of the diene based rubber from a viewpoint of effective vulcanization at a minimum necessary amount.

### (Preparation of rubber composition)

The disclosed rubber composition may be prepared by, for example, kneading the aforementioned components by using a Banbury mixer, a Brabender mixer, a kneader, etc.

A rubber composition prepared in this way has the following features. In the case of performing vulcanization adhesion of such rubber composition and a reinforcing member in a wide range of vulcanization temperature, and then peeling off the same, it is possible to obtain high peel strength without depending on the vulcanization temperature. Moreover, in the case of performing vulcanization adhesion of such rubber composition and a reinforcing member in a wide range of vulcanization temperature, and then peeling off the same, the amount of the rubber composition remaining on the reinforcing members is larger. Although the reason thereof is still uncertain, it can be estimated that synergy of each aforementioned condition optimizes uneven distribution of each filler (carbon black and wet silica) toward an interface during vulcanization, particularly vulcanization under a condition of a low temperature and a long time, thereby forming a strong double bond between the rubber composition and the reinforcing material.

Further, due to these features, the disclosed rubber composition is regarded as having excellent adhesiveness to a reinforcing member such as an organic fiber, and may be preferably used in manufacture of rubber products such as tires for automobiles, conveyor belts, and hoses. Specifically, when manufacturing a rubber product, it is possible to arrange this rubber composition between a rubber member and a reinforcing member, or between reinforcing members, to firmly adhere these members to one another. In other words, the disclosed rubber composition may be used as an adhesive rubber composition. This rubber composition may be used, for example, to a conveyor belt, by shaping into a layered shape and laminating together with reinforcing member layers. Furthermore, during endless processing of such conveyor belt, after peeling reinforcing members or a rubber member off from a reinforcing member adhered by the aforementioned rubber composition, and then re-adhering these by using a rubber for endless adhesion, it is possible to perform firm adhesion.

### <Laminated body>

The disclosed laminated body is obtained by laminating and adhering at least a layer containing the disclosed rubber composition (hereinafter also referred to as "the present rubber composition layer") and a reinforcing member layer to each other. In other words, the disclosed laminated body is obtained by laminating and adhering the present rubber composition layer and the reinforcing member layer to each other. Note that the disclosed laminated body is inclusive of a laminated body obtained by alternately laminating and adhering a plurality of the present rubber composition layers and one or a plurality of the reinforcing member layers to one another, and is also inclusive of a laminated body obtained by laminating and adhering the present rubber composition layer onto both sides of a reinforcing member layer, and further laminating two or more of a product obtained thereby. Moreover, in addition to a layer containing the disclosed rubber composition, the disclosed laminated body may also include a rubber layer other than a layer containing the disclosed rubber composition.

### (The present rubber composition layer)

The present rubber composition layer may be one obtained by shaping the disclosed rubber composition into a sheet-like shape by using an apparatus such as a rolling roll, an extruder, and the like.

The thickness of the present rubber composition layer is not specifically limited and may be appropriately selected depending on the purpose, but is preferably 0.2 mm or more and 2 mm or less from a viewpoint of inhibiting rubber breakage during molding, and thinning. In the case of using a plurality of the present rubber composition layers, the thickness of each present rubber composition layer may be either the same as or different from each other.

### (Reinforcing member layer)

The reinforcing member layer has a function of improving reinforcement performance of rubber products such as tires for automobiles, conveyor belts, and hoses. Here, the reinforcing member layer is not particularly limited and may be appropriately selected depending on the purpose. The reinforcing member layer as an adhesion target of the present rubber composition layer is particularly preferably a layer including an organic fiber (hereinafter also referred to as "organic fiber layer"), more preferably a canvas layer formed of an organic fiber. Note that the term "canvas" herein refers to a textile obtained by weaving fibers.

The material of the organic fiber is not specifically limited and may be appropriately selected depending on the purpose. Examples include fibers formed of aliphatic polyamides such as nylon; aromatic polyamides such as Kevlar; polyesters such as polyethylene terephthalate, polyethylene naphthalate, polyethylene succinate and polymethyl methacrylate; syndiotactic-1,2-polybutadiene; acrylonitrile-butadiene-styrene copolymer; polystyrene; and copolymers thereof. These may be used alone or in combination of two or more. For example, in the case of using a canvas formed of an organic fiber as the reinforcing member layer, warp and woof yarns of the canvas may be formed of different materials.

Note that the reinforcing member layer may be an untreated organic fiber layer, but is preferably one including on at least a part of its surface, for example, its entire surface, a film containing resorcinol, formaldehyde, a condensate of resorcinol and formaldehyde, and a latex (hereinafter also referred to as "RFL film"), from a viewpoint of improving of adhesiveness of the present rubber composition layer to the reinforcing member layer.

The RFL film may be obtained by, for example, before laminating together with the present rubber composition layer, immersing at least a part of the organic fiber, for example, the entire organic fiber, in a liquid containing resorcinol, formaldehyde, a partial condensate of resorcinol and formaldehyde, and a latex (hereinafter also referred to as "RFL dispersion"), and subjecting the same to heat treatment. The partial condensate of resorcinol and formaldehyde may be obtained via resolification reaction. From a viewpoint of improving adhesiveness between the present rubber composition layer and the reinforcing member layer, examples of the latex to be contained in the RFL dispersion include vinyl pyridine latex, styrene-butadiene copolymer latex (SBR latex), natural rubber latex, acrylate copolymer based latex, butyl rubber latex, nitrile rubber latex, and chloroprene latex. These may be used alone or in a combination of two or more.

When preparing the RFL dispersion, reaction catalysts such as acids and alkalis may be used together if necessary.

Note that the mass ratio of the resorcinol, the formaldehyde, the partial condensate of resorcinol and formaldehyde, to the latex in the RFL dispersion is not specifically limited.

Specifically, the RFL film may be obtained by immersing a part or an entire organic fiber such as a canvas in the aforementioned RFL dispersion, removing extra attached liquid by passing the same between rolls or performing vacuum suction if necessary, and then performing one-phase or multiphase heat treatment.

Here, in order to accelerate the reaction and to reduce heat shrinkage in actual use, a final treatment temperature in the heat treatment is preferably 180°C or higher, particularly preferably 200°C or higher.

### (Rubber layer other than the present rubber composition layer)

The disclosed laminated body may further include a rubber layer other than the present rubber composition layer on at least one of the outermost layers depending on the requirement of the desired rubber product. For example, in the case of using the disclosed laminated body to a conveyor belt, the laminated body may include, on the outermost layer, a rubber layer capable of functioning as a cover rubber. Here, the rubber layer capable of functioning as a cover rubber is not specifically limited. Examples thereof may be obtained by appropriately kneading: a polymer component containing a natural rubber (NR), a butadiene rubber (BR), a styrene-butadiene rubber (SBR), an isoprene rubber (IR), a chloroprene rubber (CR), an ethylene-propylene-dine rubber (EPDM), an acrylonitrile-butadiene rubber (NBR), a butyl rubber (IIR), etc., or a mixture thereof; and a vulcanizing agent such as sulfur, a vulcanization accelerator, a vulcanization accelerator aid such as zinc oxide, a softener, an age resistor, an antiscorching agent, a processing aid, a lubricant, a carbon black, a silica, calcium carbonate, a filler modifier, a tackifier, a colorant, etc., depending on the purpose. Note that examples of the cover rubber include an upper cover rubber and a lower cover rubber, which may be rubber members of either the same type or different types.

In the case where the disclosed laminated body includes, on the outermost layer, a rubber layer other than the present rubber composition layer, such rubber layer is preferably adjacent, on the inner side thereof, to the present rubber composition layer.

### (Preparation of laminated body)

The method for laminating the present rubber composition layer, the reinforcing member layer, and optionally a rubber layer other than the present rubber composition layer is not specifically limited, and an ordinary method may be used for laminating.

Here, in the case of laminating with a conventionally known calendering process by using the present rubber composition layer and the reinforcing member layer, a laminated body A may first be manufactured, which includes a rubber composition layer - a reinforcing member layer - a rubber composition layer. This laminated body A may be directly used. Alternatively, two or more of the laminated bodies A may be laminated to one another so as to be used as a laminated body B, depending on necessary properties of the rubber product such as conveyor belt and the like (namely, the laminated body B will include [a rubber composition layer - a reinforcing member layer - a rubber composition layer - a rubber composition layer - a reinforcing member layer - a rubber composition layer] when formed by laminating two of the laminated bodies A to each other). Furthermore, for example, in manufacture of the conveyor belt, the disclosed laminated body can be prepared by laminating the aforementioned rubber layer capable of functioning as a cover rubber to the outermost surface of the laminated body A or of the laminated body B with an ordinary method. Note that examples of the aforementioned laminated body B used in manufacture of the conveyor belt may be obtained by overlapping two to eight of the laminated bodies A.

The method for adhering the laminated present rubber composition layer and the reinforcing member layer, and optionally the present rubber composition layer and a rubber layer other than the present rubber composition layer, is not specifically limited. Examples thereof include: a method of arranging the laminated rubber composition layer and reinforcing member layer, and optionally the rubber layer other than the present rubber composition layer, in a predetermined mold, and adhering via vulcanization (the so-called vulcanization molding).

Since the subject of vulcanization is a layer containing the disclosed rubber composition, the vulcanization temperature can be set to be in an extremely wide range. However, from a viewpoint of sufficiently adhering the present rubber composition layer and the reinforcing member layer to each other, and simultaneously suppressing over-vulcanization, the vulcanization temperature is preferably in a range of 130°C to 170°C. The vulcanization time is not specifically limited, but is preferably set appropriately so as to sufficiently conduct heat to the center of the laminated body to perform vulcanization, in order to sufficiently adhere the present rubber composition layer and the reinforcing member layer to each other.

The laminated body prepared in this way has the present rubber composition layer and the reinforcing member layer, and optionally the present rubber composition layer and a rubber layer other than the present rubber composition layer, which are firmly adhered to each other, and thus may be preferably used as a member of rubber products required to have high durability, such as tires for automobiles, conveyor belts, and hoses. Further, the laminated body prepared in this way has high adhesiveness to a reinforcing member as a constituent material of the rubber composition without depending on the vulcanization temperature. Therefore, the aforementioned laminated body can be manufactured under production conditions that can readily be optimized, without deteriorating its durability or quality.

### <Conveyor belt>

The disclosed conveyor belt includes the disclosed laminated body. The disclosed conveyor belt is not specifically limited as long as the disclosed laminated body is used therefor.

As mentioned above, in the disclosed conveyor belt, the present rubber composition layer and the reinforcing member, and optionally the present rubber composition layer and a rubber layer other than the present rubber composition layer, are firmly adhered to each other, and thus the disclosed conveyor belt has high durability. Moreover, the disclosed conveyor belt has high adhesiveness to a reinforcing member as a constituent material of the rubber composition, without depending on the vulcanization temperature. Therefore, the conveyor belt can be manufactured under production conditions that can readily be optimized, without deteriorating its durability or quality.

### EXAMPLES

The following describes this disclosure in more detail through examples. However, this disclosure is not in any way limited by the following examples and suitable alterations may be made that do not change the essence thereof.

### <Preparation of rubber composition>

A Banbury mixer is used to prepare an unvulcanized rubber composition through addition of: a processing aid; a lubricant; sulfur; a vulcanization accelerator; and zinc oxide to the formulations as listed in Tables 1 to 4 (unit: parts by mass) at amounts selected according to an ordinary method.

### <Preparation of reinforcing member layer>

A piece of canvas cloth including warp yarns formed of polyethylene terephthalate (number of twist: 16 T/10cm, number of yarn: 83/5cm) and woof yarns formed of nylon (number of twist: 12 T/10cm, number of yarn: 32/5cm) was prepared. On the other hand, resorcinol, formalin, water, and an alkaline reaction catalyst were sequentially mixed and stirred, so as to partially proceed a condensation reaction of resorcinol and formaldehyde, and then an SBR latex, a vinyl pyridine latex, and water were mixed and stirred, to thereby prepare an RFL dispersion. Then, the aforementioned piece of canvas cloth was entirely immersed in the RFL dispersion thus obtained. The immersed piece of canvas cloth was subjected to drying and heat treatment until the final treatment temperature fell within a range of 210°C to 240°C, so as to obtain a reinforcing member layer including an RFL film on its surface. When forming the RFL film in the reinforcing member layer, the RFL dispersion was adjusted until a latex concentration in terms of the SBR latex and the vinyl pyridine latex in the RFL film in total became 83 mass%.

### <Preparation of laminated body sample>

First, separately from the laminated body sample, the aforementioned unvulcanized rubber composition was cut into a block shape with a weight of 8±1 g, so as to determine the 90% vulcanization time at 168°C (t_{c1}(90)) and the 90% vulcanization time at 132°C (t_{c2}(90)) with a Curelastometer ("CURELASTOMETER7", manufactured by JSR corporation) according to JIS K6300-2 and ISO6502.

Next, by using the aforementioned unvulcanized rubber composition, a rubber composition layer with a thickness of 0.7 mm was manufactured with a 6-inch diameter rolling roll. Next, by using this rubber composition layer and the aforementioned reinforcing member layer, an unvulcanized laminated body sample of a 7-layer structure of [rubber composition layer A - reinforcing member layer - rubber composition layer B - reinforcing member layer - rubber composition layer C - reinforcing member layer-rubber composition layer D] was prepared. This unvulcanized laminated body sample was vulcanized within a predetermined mold at 168°C for a time that is 1.5 times the t_{c1}(90) determined as mentioned above, left to stand overnight at room temperature, so as to obtain a vulcanized laminated body sample I. The same unvulcanized laminated body sample was vulcanized within a predetermined mold at 132°C for a time that is 1.5 times the t_{c2}(90) determined as mentioned above, left to stand overnight at room temperature, so as to obtain a vulcanized laminated body sample II.

Note that the aforementioned rubber composition layers A to D were each prepared from a rubber composition of the same type.

By using these vulcanized laminated body samples I and II, a peel test was performed on the rubber composition layers and the reinforcing member layers according to the following procedure.

### (Peel test of rubber composition layer and reinforcing member layer)

The aforementioned vulcanized laminated body sample was cut into a width of 25 mm in the warp direction, and then cuts of 10 mm to 20 mm were opened with a knife on a part of the rubber composition layer B. A peel test was performed with an "Auto Rubber Universal Testing Machine AC-10kN" manufactured by TSE Corporation, in which the sample was peeled off from the cut portions. The peel angle was 90° and the peel speed was 50 mm/min. The amount of rubber remaining on the reinforcing member layer after this test (rubber attachment amount) was evaluated according to the method described below. Specifically, the two reinforcing members adjacent to the rubber composition layer B after the peeling were visually inspected, so as to choose the one having a smaller rubber attachment amount, so as to take a sample photo of its rubber attachment surface. Next, the sample photo thus taken was subjected to image thresholding so as to be separated into a rubber component and a reinforcing member layer component, and was subjected to area calculation with an image processing software, so as to determine the rubber attachment amount (unit: %). The resulting rubber attachment amount of the vulcanized laminated body sample I was defined as "rubber attachment amount I", and the resulting rubber attachment amount of the vulcanized laminated body sample II was defined as "rubber attachment amount II". The rubber attachment amount under a vulcanization condition of high temperature was evaluated based on the value of the rubber attachment amount I according to the following standard, and the calculated value of [(rubber attachment amount II) / (rubber attachment amount I)] was evaluated as a variation ratio of the rubber attachment amount according to the following standard. A higher variation ratio of the rubber attachment amount indicates lower dependence to the vulcanization temperature of adhesiveness of the rubber composition to a reinforcing member. Tables 1 to 4 indicate the result of this evaluation.
- Evaluation of rubber attachment amount under condition under vulcanization condition of high temperature-
   Rubber attachment amount I more than 60% ... Excellent
   Rubber attachment amount I of 40% or more and less than 60% ... Good
   Rubber attachment amount I less than 40%... Poor
- Evaluation of variation ratio of rubber attachment amount-
   Variation ratio of rubber attachment amount more than 0.9 ... 9
   Variation ratio of rubber attachment amount more than 0.8 and 0.9 or less ... 8
   Variation ratio of rubber attachment amount more than 0.7 and 0.8 or less ... 7
   Variation ratio of rubber attachment amount more than 0.6 and 0.7 or less ... 6
   Variation ratio of rubber attachment amount more than 0.5 and 0.6 or less ... 5
   Variation ratio of rubber attachment amount more than 0.4 and 0.5 or less ... 4
   Variation ratio of rubber attachment amount more than 0.3 and 0.4 or less ... 3
   Variation ratio of rubber attachment amount more than 0.2 and 0.3 or less ... 2
   Variation ratio of rubber attachment amount of 0.2 or less ... 1

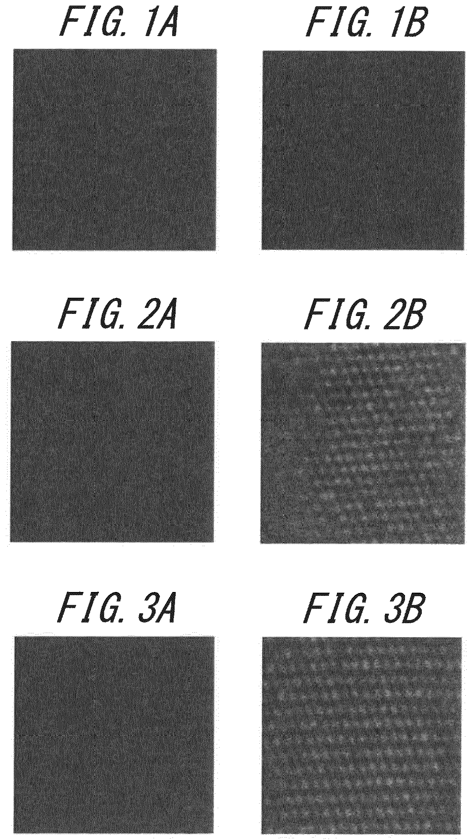

For reference, FIG. 1A illustrates a schematic view of a peeled surface in a test using the vulcanized laminated body sample I of Example 1, and FIG. 1B illustrates a schematic view of a peeled surface in a test using the vulcanized laminated body sample II of Example 1. Similarly, FIG. 2A illustrates a schematic view of a peeled surface in a test using the vulcanized laminated body sample I of Comparative Example 2, and FIG. 2B illustrates a schematic view of a peeled surface in a test using the vulcanized laminated body sample II of Comparative Example 2. Similarly, FIG. 3A illustrates a schematic view of a peeled surface in a test using the vulcanized laminated body sample I of Comparative Example 6, and FIG. 3B illustrates a schematic view of a peeled surface in a test using the vulcanized laminated body sample II of Comparative Example 6. Here, a darker color of the peeled surface indicates that more rubber composition remained, and indicates excellent adhesiveness without occurrence of interfacial peeling between the rubber composition layer and the reinforcing member layer.

**[Table 1]**

| | | Comparative Example | Comparative Example | Comparative Example | Comparative Example | Comparative Example | Comparative Example | Comparative Example | Comparative Example | Comparative Example | Example | Example | Example | Example |
|---|---|---|---|---|---|---|---|---|---|---|---|---|---|---|
| | | 1 | 2 | 3 | 4 | 5 | 6 | 7 | 8 | 9 | 1 | 2 | 3 | 4 |
| (A) | Natural rubber *1 | 40 | 40 | 40 | 40 | 40 | 40 | 40 | 40 | 40 | 40 | 40 | 40 | 40 |
| (A) | Styrene-butadiene rubber *2 | 60 | 60 | 60 | 60 | 60 | 60 | 60 | 60 | 60 | 60 | 60 | 60 | 60 |
| | Carbon black 1 *3 | 45 | 0 | 0 | 0 | 0 | 0 | 0 | 0 | 0 | 0 | 0 | 0 | 0 |
| (b-1) | Carbon black 2 *4 | 0 | 45 | 0 | 0 | 0 | 0 | 0 | 0 | 0 | 10 | 10 | 10 | 10 |
| (b-1) | Carbon black 3 *5 | 0 | 0 | 45 | 0 | 0 | 0 | 0 | 0 | 0 | 0 | 0 | 0 | 0 |
| | Carbon black 4 *6 | 0 | 0 | 0 | 45 | 0 | 0 | 0 | 0 | 0 | 0 | 0 | 0 | 0 |
| (b-1) | Carbon black 5 *7 | 0 | 0 | 0 | 0 | 45 | 0 | 0 | 0 | 0 | 0 | 0 | 0 | 0 |
| | Carbon black 6 *8 | 0 | 0 | 0 | 0 | 0 | 45 | 0 | 0 | 0 | 0 | 0 | 0 | 0 |
| (b-2) | Carbon black 7 *9 | 0 | 0 | 0 | 0 | 0 | 0 | 45 | 0 | 0 | 35 | 35 | 35 | 35 |
| (b-2) | Carbon black 8 *10 | 0 | 0 | 0 | 0 | 0 | 0 | 0 | 45 | 0 | 0 | 0 | 0 | 0 |
| | Carbon black 9 *11 | 0 | 0 | 0 | 0 | 0 | 0 | 0 | 0 | 45 | 0 | 0 | 0 | 0 |
| (C) | Wet silica 1 *12 | 5 | 5 | 5 | 5 | 5 | 5 | 5 | 5 | 5 | 0 | 0 | 0 | 0 |
| (C) | Wet silica 2 *13 | 0 | 0 | 0 | 0 | 0 | 0 | 0 | 0 | 0 | 5 | 0 | 0 | 0 |
| (C) | Wet silica 3 *14 | 0 | 0 | 0 | 0 | 0 | 0 | 0 | 0 | 0 | 0 | 5 | 0 | 0 |
| (C) | Wet silica 4 *15 | 0 | 0 | 0 | 0 | 0 | 0 | 0 | 0 | 0 | 0 | 0 | 5 | 0 |
| (C) | Wet silica 5 *16 | 0 | 0 | 0 | 0 | 0 | 0 | 0 | 0 | 0 | 0 | 0 | 0 | 5 |
| (C) | Wet silica 6 *17 | 0 | 0 | 0 | 0 | 0 | 0 | 0 | 0 | 0 | 0 | 0 | 0 | 0 |
| | Dry silica *18 | 0 | 0 | 0 | 0 | 0 | 0 | 0 | 0 | 0 | 0 | 0 | 0 | 0 |
| (D) | Calcium carbonate *19 | 80 | 80 | 80 | 80 | 80 | 80 | 80 | 80 | 80 | 80 | 80 | 80 | 80 |
| (b-1)/{(b-1)+(b-2)}×100(mass%) | | 100 | 100 | 100 | 100 | 100 | 0 | 0 | 0 | 0 | 22.2 | 22.2 | 22.2 | 22.2 |
| Evaluation | Evaluation of rubber attachment amount under vulcanization condition of high temperature | Good | Excellent | Good | Good | Excellent | Good | Excellent | Excellent | Excellent | Excellent | Excellent | Excellent | Excellent |
| | Evaluation of variation ratio of rubber attachement amount | 3 | 5 | 4 | 3 | 3 | 3 | 5 | 4 | 3 | 6 | 6 | 7 | 6 |

**[Table 2]**

| | | Example | Comparative Example | Comparative Example | Example | Example | Comparative Example | Example | Comparative Example | Example | Comparative Example | Comparative Example | Comparative Example | Example |
|---|---|---|---|---|---|---|---|---|---|---|---|---|---|---|
| | | 5 | 10 | 11 | 6 | 7 | 12 | 8 | 13 | 9 | 14 | 15 | 16 | 10 |
| (A) | Natural rubber *1 | 40 | 40 | 40 | 40 | 40 | 40 | 40 | 40 | 40 | 40 | 40 | 40 | 40 |
| (A) | Styrene-butadiene rubber *2 | 60 | 60 | 60 | 60 | 60 | 60 | 60 | 60 | 60 | 60 | 60 | 60 | 60 |
| | Carbon black 1 *3 | 0 | 0 | 10 | 0 | 0 | 0 | 0 | 0 | 0 | 0 | 0 | 0 | 0 |
| (b-1) | Carbon black 2 *4 | 10 | 10 | 0 | 10 | 0 | 0 | 0 | 10 | 10 | 10 | 4.44 | 13.32 | 10 |
| (b-1) | Carbon black 3 *5 | 0 | 0 | 0 | 0 | 10 | 0 | 0 | 0 | 0 | 0 | 0 | 0 | 0 |
| | Carbon black 4 *6 | 0 | 0 | 0 | 0 | 0 | 10 | 0 | 0 | 0 | 0 | 0 | 0 | 0 |
| (b-1) | Carbon black 5 *7 | 0 | 0 | 0 | 0 | 0 | 0 | 10 | 0 | 0 | 0 | 0 | 0 | 0 |
| | Carbon black 6 *8 | 0 | 0 | 0 | 0 | 0 | 0 | 0 | 35 | 0 | 0 | 0 | 0 | 0 |
| (b-2) | Carbon black 7 *9 | 35 | 35 | 35 | 35 | 35 | 35 | 35 | 0 | 0 | 0 | 15.56 | 46.68 | 35 |
| (b-2) | Carbon black 8 *10 | 0 | 0 | 0 | 0 | 0 | 0 | 0 | 0 | 35 | 0 | 0 | 0 | 0 |
| | Carbon black 9 *11 | 0 | 0 | 0 | 0 | 0 | 0 | 0 | 0 | 0 | 35 | 0 | 0 | 0 |
| (C) | Wet silica 1 *12 | 0 | 0 | 5 | 5 | 5 | 5 | 5 | 5 | 5 | 5 | 5 | 5 | 30 |
| (C) | Wet silica 2 *13 | 0 | 0 | 0 | 0 | 0 | 0 | 0 | 0 | 0 | 0 | 0 | 0 | 0 |
| (C) | Wet silica 3 *14 | 0 | 0 | 0 | 0 | 0 | 0 | 0 | 0 | 0 | 0 | 0 | 0 | 0 |
| (C) | Wet silica 4 *15 | 0 | 0 | 0 | 0 | 0 | 0 | 0 | 0 | 0 | 0 | 0 | 0 | 0 |
| (C) | Wet silica 5 *16 | 0 | 0 | 0 | 0 | 0 | 0 | 0 | 0 | 0 | 0 | 0 | 0 | 0 |
| (C) | Wet silica 6 *17 | 5 | 0 | 0 | 0 | 0 | 0 | 0 | 0 | 0 | 0 | 0 | 0 | 0 |
| | Dry silica *18 | 0 | 5 | 0 | 0 | 0 | 0 | 0 | 0 | 0 | 0 | 0 | 0 | 0 |
| (D) | Calcium carbonate *19 | 80 | 80 | 80 | 80 | 80 | 80 | 80 | 80 | 80 | 80 | 80 | 80 | 80 |
| (b-1)/{(b-1)+(b-2)}×100(mass%) | | 22.2 | 22.2 | 22.2 | 22.2 | 22.2 | 22.2 | 22.2 | 22.2 | 22.2 | 22.2 | 22.2 | 22.2 | 22.2 |
| Evaluation | Evaluation of rubber attachment amount under vulcanization condition of high temperature | Excellent | Excellent | Excellent | Excellent | Excellent | Excellent | Excellent | Excellent | Excellent | Excellent | Excellent | Good | Excellent |
| | Evaluation of variation ratio of rubber attachement amount | 6 | 5 | 5 | 9 | 8 | 5 | 6 | 5 | 8 | 4 | 4 | 5 | 6 |

**[Table 3]**

| | | Example | Comparative Example | Comparative Example | Example | Example | Example | Example | Example | Example | Example | Example | Example | Example |
|---|---|---|---|---|---|---|---|---|---|---|---|---|---|---|
| | | 11 | 17 | 18 | 12 | 13 | 14 | 15 | 16 | 17 | 18 | 19 | 20 | 21 |
| (A) | Natural rubber *1 | 40 | 40 | 40 | 40 | 40 | 40 | 40 | 40 | 40 | 40 | 40 | 40 | 40 |
| (A) | Styrene-butadiene rubber *2 | 60 | 60 | 60 | 60 | 60 | 60 | 60 | 60 | 60 | 60 | 60 | 60 | 60 |
| | Carbon black 1 *3 | 0 | 0 | 0 | 0 | 0 | 0 | 0 | 0 | 0 | 0 | 0 | 0 | 0 |
| (b-1) | Carbon black 2 *4 | 10 | 10 | 10 | 10 | 10 | 10 | 10 | 10 | 10 | 10 | 3 | 5 | 20 |
| (b-1) | Carbon black 3 *5 | 0 | 0 | 0 | 0 | 0 | 0 | 0 | 0 | 0 | 0 | 0 | 0 | 0 |
| | Carbon black 4 *6 | 0 | 0 | 0 | 0 | 0 | 0 | 0 | 0 | 0 | 0 | 0 | 0 | 0 |
| (b-1) | Carbon black 5 *7 | 0 | 0 | 0 | 0 | 0 | 0 | 0 | 0 | 0 | 0 | 0 | 0 | 0 |
| | Carbon black 6 *8 | 0 | 0 | 0 | 0 | 0 | 0 | 0 | 0 | 0 | 0 | 0 | 0 | 0 |
| (b-2) | Carbon black 7 *9 | 35 | 35 | 35 | 35 | 35 | 35 | 35 | 35 | 35 | 35 | 42 | 40 | 25 |
| (b-2) | Carbon black 8 *10 | 0 | 0 | 0 | 0 | 0 | 0 | 0 | 0 | 0 | 0 | 0 | 0 | 0 |
| | Carbon black 9 *11 | 0 | 0 | 0 | 0 | 0 | 0 | 0 | 0 | 0 | 0 | 0 | 0 | 0 |
| (C) | Wet silica 1 *12 | 12 | 0 | 2.5 | 9 | 5 | 5 | 5 | 5 | 5 | 5 | 5 | 5 | 5 |
| (C) | Wet silica 2 *13 | 0 | 0 | 0 | 0 | 0 | 0 | 0 | 0 | 0 | 0 | 0 | 0 | 0 |
| (C) | Wet silica 3 *14 | 0 | 0 | 0 | 0 | 0 | 0 | 0 | 0 | 0 | 0 | 0 | 0 | 0 |
| (C) | Wet silica 4 *15 | 0 | 0 | 0 | 0 | 0 | 0 | 0 | 0 | 0 | 0 | 0 | 0 | 0 |
| (C) | Wet silica 5 *16 | 0 | 0 | 0 | 0 | 0 | 0 | 0 | 0 | 0 | 0 | 0 | 0 | 0 |
| (C) | Wet silica 6 *17 | 0 | 0 | 0 | 0 | 0 | 0 | 0 | 0 | 0 | 0 | 0 | 0 | 0 |
| | Dry silica *18 | 0 | 0 | 0 | 0 | 0 | 0 | 0 | 0 | 0 | 0 | 0 | 0 | 0 |
| (D) | Calcium carbonate *19 | 80 | 80 | 80 | 80 | 5 | 10 | 20 | 40 | 110 | 130 | 80 | 80 | 80 |
| (b-1)/{(b-1)+(b-2)}×100(mass%) | | 22.2 | 22.2 | 22.2 | 22.2 | 22.2 | 22.2 | 22.2 | 22.2 | 22.2 | 22.2 | 6.7 | 11.1 | 44.4 |
| Evaluation | Evaluation of rubber attachment amount under vulcanization condition of high temperature | Excellent | Good | Excellent | Excellent | Excellent | Excellent | Excellent | Excellent | Excellent | Excellent | Excellent | Excellent | Excellent |
| | Evaluation of variation ratio of rubber attachement amount | 7 | 3 | 5 | 8 | 6 | 6 | 7 | 7 | 7 | 6 | 6 | 8 | 8 |

**[Table 4]**

| | | Example 22 | Comparative Example 19 | Comparative Example 20 | Comparative Example 21 | Comparative Example 22 | Example 23 | Comparative Example 23 | Comparative Example 24 | Comparative Example 25 | Comparative Example 26 | Comparative Example 27 | Example 24 | Comparative Example 28 |
|---|---|---|---|---|---|---|---|---|---|---|---|---|---|---|
| (A) | Natural rubber *1 | 40 | 40 | 40 | 40 | 40 | 40 | 40 | 40 | 40 | 40 | 40 | 40 | 40 |
| (A) | Styrene-butadiene rubber *2 | 60 | 60 | 60 | 60 | 60 | 60 | 60 | 60 | 60 | 60 | 60 | 60 | 60 |
| | Carbon black 1 *3 | 0 | 10 | 10 | 10 | 0 | 0 | 0 | 0 | 0 | 0 | 0 | 0 | 0 |
| (b-1) | Carbon black 2 *4 | 25 | 0 | 0 | 0 | 0 | 0 | 0 | 0 | 0 | 0 | 0 | 0 | 0 |
| (b-1) | Carbon black 3 *5 | 0 | 0 | 0 | 0 | 10 | 10 | 10 | 0 | 0 | 0 | 0 | 0 | 0 |
| | Carbon black 4 *6 | 0 | 0 | 0 | 0 | 0 | 0 | 0 | 10 | 10 | 10 | 0 | 0 | 0 |
| (b-1) | Carbon black 5 *7 | 0 | 0 | 0 | 0 | 0 | 0 | 0 | 0 | 0 | 0 | 10 | 10 | 10 |
| | Carbon black 6 *8 | 0 | 35 | 0 | 0 | 35 | 0 | 0 | 35 | 0 | 0 | 35 | 0 | 0 |
| (b-2) | Carbon black 7 *9 | 20 | 0 | 0 | 0 | 0 | 0 | 0 | 0 | 0 | 0 | 0 | 0 | 0 |
| (b-2) | Carbon black 8 *10 | 0 | 0 | 35 | 0 | 0 | 35 | 0 | 0 | 35 | 0 | 0 | 35 | 0 |
| | Carbon black 9 *11 | 0 | 0 | 0 | 35 | 0 | 0 | 35 | 0 | 0 | 35 | 0 | 0 | 35 |
| (C) | Wet silica 1 *12 | 5 | 5 | 5 | 5 | 5 | 5 | 5 | 5 | 5 | 5 | 5 | 5 | 5 |
| (C) | Wet silica 2 *13 | 0 | 0 | 0 | 0 | 0 | 0 | 0 | 0 | 0 | 0 | 0 | 0 | 0 |
| (C) | Wet silica 3 *14 | 0 | 0 | 0 | 0 | 0 | 0 | 0 | 0 | 0 | 0 | 0 | 0 | 0 |
| (C) | Wet silica 4 *15 | 0 | 0 | 0 | 0 | 0 | 0 | 0 | 0 | 0 | 0 | 0 | 0 | 0 |
| (C) | Wet silica 5 *16 | 0 | 0 | 0 | 0 | 0 | 0 | 0 | 0 | 0 | 0 | 0 | 0 | 0 |
| (C) | Wet silica 6 *17 | 0 | 0 | 0 | 0 | 0 | 0 | 0 | 0 | 0 | 0 | 0 | 0 | 0 |
| | Dry silica *18 | 0 | 0 | 0 | 0 | 0 | 0 | 0 | 0 | 0 | 0 | 0 | 0 | 0 |
| (D) | Calcium carbonate *19 | 80 | 80 | 80 | 80 | 80 | 80 | 80 | 80 | 80 | 80 | 80 | 80 | 80 |
| (b-1)/{(b-1)+(b-2)}×100(mass%) | | 55.6 | 22.2 | 22.2 | 22.2 | 22.2 | 22.2 | 22.2 | 22.2 | 22.2 | 22.2 | 22.2 | 22.2 | 22.2 |
| Evaluation | Evaluation of rubber attachment amount under vulcanization condition of high temperature | Good | Good | Good | Good | Good | Excellent | Excellent | Good | Excellent | Excellent | Excellent | Excellent | Excellent |
| | Evaluation of variation ratio of rubber attachement amount | 6 | 4 | 5 | 3 | 5 | 7 | 5 | 3 | 5 | 4 | 4 | 6 | 3 |

| | | | | | | | | | | | | | | |
|---|---|---|---|---|---|---|---|---|---|---|---|---|---|---|
| *1 Natural rubber ... Grade; No. RSS-4 *2 Styrene-butadiene rubber ... "TAFDEN 2000R", manufactured by Asahi Kasei Chemicals Corporation *3 Carbon black 1 ... "SEAST 600", manufactured by Tokai Carbon Co., Ltd., nitrogen adsorption BET specific surface area: 106 m²/g, DBP oil absorption: 75 mL/100g *4 Carbon black 2 ... "ASAHI#80", manufactured by Asahi Carbon Co., Ltd., nitrogen adsorption BET specific surface area: 115 m²/g, DBP oil absorption: 113 mL/100g *5 Carbon black 3 ... "SEAST 3", manufactured by Tokai Carbon Co., Ltd., nitrogen adsorption BET specific surface area: 79 m²/g, DBP oil absorption: 101 mL/100g *6 Carbon black 4 ... "AX-015", manufactured by Asahi Carbon Co., Ltd., nitrogen adsorption BET specific surface area: 145 m²/g, DBP absorption: 147 mL/100g *7 Carbon black 5 ... "SEAST 9", manufactured by Tokai Carbon Co., Ltd., nitrogen adsorption BET specific surface area: 142 m²/g, DBP absorption: 115 mL/100g *8 Carbon black 6 ... "ASAHI#35", manufactured by Asahi Carbon Co., Ltd., nitrogen adsorption BET specific surface area: 24 m²/g, DBP oil absorption: 50 mL/100g *9 Carbon black 7 ... "SEAST SO", manufactured by Tokai Carbon Co., Ltd., nitrogen adsorption BET specific surface area: 27 m²/g, DBP oil absorption: 68 mL/100g *10 Carbon black 8 ... "ASAHI#15HS", manufactured by Asahi Carbon Co., Ltd., nitrogen adsorption BET specific surface area: 14 m²/g, DBP oil absorption: 90 mL/100g *11 Carbon black 9 ... "ASAHI#66", manufactured by Asahi Carbon Co., Ltd., nitrogen adsorption BET specific surface area: 43 m²/g, DBP oil absorption: 137 mL/100g *12 Wet silica 1 ... "Nipsil AQ", manufactured by Tosoh Silica Corporation, nitrogen adsorption BET specific surface area: 205 m²/g *13 Wet silica 2 ... "Nipsil SS-50F", manufactured by Tosoh Silica Corporation, nitrogen adsorption BET specific surface area: 82 m²/g *14 Wet silica 3 ... "Nipsil SS-70", manufactured by Tosoh Silica Corporation, nitrogen adsorption BET specific surface area: 42 m²/g *15 Wet silica 4 ... "ULTRASIL VN3", manufactured by Evonic Degussa Corporation, nitrogen adsorption BET specific surface area: 175 m²/g *16 Wet silica 5 ... "Nipsil NA", manufactured by Tosoh Silica Corporation, nitrogen adsorption BET specific surface area: 135 m²/g *17 Wet silica 6 ... "Nipsil ER", manufactured by Tosoh Silica Corporation, nitrogen adsorption BET specific surface area: 95 m²/g *18 Dry silica ... "AEROSIL 130", manufactured by Nippon Aerosil Co., Ltd., nitrogen adsorption BET specific surface area: 130 m²/g *19 Calcium carbonate ... "NS#100", manufactured by Nitto Funka Kogyo K.K., average primary particle size: 2.1 µm | | | | | | | | | | | | | | |

According to Tables 1 to 4, the disclosed rubber composition, which contains 25 parts by mass or more and 55 parts by mass or less of carbon black including the carbon black (b-1) and the carbon black (b-2) and 3 parts by mass or more of wet silica per 100 parts by mass of the diene based rubber, had a larger rubber amount remaining on a reinforcing member layer after a peel test against the reinforcing member layer when vulcanized under a vulcanization condition of 168°C by contacting with the reinforcing member layer. Therefore, it is understood that the disclosed rubber composition has excellent adhesiveness to a reinforcing member. Further, according to Tables 1 to 4, the disclosed rubber composition does not have a larger difference of the rubber amount remaining on the reinforcing member layer after the peel test with the reinforcing member layer between when vulcanized under a vulcanization condition of 168°C and when vulcanized under a vulcanization condition of 132°C. This indicates that the disclosed rubber composition has high adhesiveness to a reinforcing member without depending on the vulcanization temperature, which is also obvious from both FIG. 1A and FIG. 1B which illustrate the peeled surfaces in darker colors (on the other hand, FIGS. 2B and 3B both illustrate the peeled surfaces in lighter colors).

### INDUSTRIAL APPLICABILITY

According to this disclosure, it is possible to provide a rubber composition capable of exhibiting high adhesiveness to a reinforcing member when vulcanized, without depending on the vulcanization temperature. Moreover, according to this disclosure, it is possible to provide a high-durability laminated body using the aforementioned rubber composition and a high-durability conveyor belt using the aforementioned laminated body that can be manufactured under production conditions that can readily be optimized.

## Claims

1. A rubber composition comprising:
100 parts by mass of (A) a diene based rubber;
25 parts by mass or more and 55 parts by mass or less of (B) carbon black including a carbon black (b-1) having a nitrogen adsorption BET specific surface area of 50 m²/g or more and a DBP oil absorption of 80 mL/100g or more and 130 mL/100g or less, and a carbon black (b-2) having a nitrogen adsorption BET specific surface area of less than 50 m²/g and a DBP oil absorption of 60 mL/100g or more and less than 110 mL/100g; and
3 parts by mass or more of (C) wet silica.

2. The rubber composition according to claim 1, wherein:
the carbon black (b-1) has a nitrogen adsorption BET specific surface area of more than 100 m²/g.

3. The rubber composition according to claim 1 or 2, wherein:
a ratio of the carbon black (b-1) to the total of the carbon black (b-1) and the carbon black (b-2) is 10 mass% or more and 50 mass% or less.

4. The rubber composition according to any one of claims 1 to 3, further comprising:
10 parts by mass or more and 120 parts by mass or less of (D) calcium carbonate.

5. The rubber composition according to any one of claims 1 to 4, wherein:
a content of the wet silica (C) is 25 parts by mass or less.

6. The rubber composition according to any one of claims 1 to 5, wherein:
the wet silica (C) has a nitrogen adsorption BET specific surface area of more than 200 m²/g.

7. The rubber composition according to any one of claims 1 to 6, existing between and being used for adhering, a rubber member and a reinforcing member, or reinforcing members.

8. A laminated body obtainable by laminating and adhering a layer comprising the rubber composition according to any one of claims 1 to 7 and a reinforcing member layer.

9. A conveyor belt comprising the laminated body according to claim 8.
